# EUROPEAN PATENT APPLICATION

(11) **EP 3 076 683 A1**
(43) Date of publication of application: **05.10.2016**
(21) Application number: 14865008.8
(22) Date of filing: 27.11.2014
(51) Int. Cl.: H04Q 9/00, H04M 11/00

(54) **OPERATING TERMINAL, PROGRAM, AND METHOD**

(30) Priority: 27.11.2013 JP 2013244577
(71) Applicant: Kyocera Corporation, Kyoto-shi, Kyoto 612-8501 (JP)
(72) Inventor: SHINOZAKI, Takayuki, Kyoto-shi Kyoto 612-8501 (JP)
(74) Representative: Schwabe - Sandmair - Marx
(86) International application number: PCT/JP2014/081356
(87) International publication number: WO 2015/080196

(57) **Abstract**

An operation terminal comprises: a display unit; a communication unit configured to perform communication; a storage unit configured to store specification information, which is information on an available operation, in association with an equipment identification code, for each of a plurality of equipments; and a control unit configured to obtain an equipment identification code of an operation target equipment by using the communication unit, and to perform control to display an operation screen for the operation target equipment on the basis of the specification information associated with the obtained equipment identification code.

## Description

### TECHNICAL FIELD

The present invention relates to an operation terminal, a program, and a method for an operating operation target equipment.

### BACKGROUND ART

In recent years, a control system (EMS: Energy Management System) controlling multiple equipments provided in consumer's facilities of electric power has attracted attentions. A control device for controlling multiple equipments is provided in such control system.

A technique for transmitting an operation instruction for an operation target equipment from an operation terminal via a network to a control device and allowing the control device to control the operation target equipment on the basis of an operation instruction in order to operate an equipment by using the operation terminal possessed by a user has been suggested (for example, see Patent Literature 1).

By the way, available operations for an equipment are different in accordance with the specification of the equipment.

However, in the technique for operating the equipment by using the operation terminal as described above, a user may select an unavailable operation that cannot be used with the operation target equipment, and therefore, an operation inappropriate for the operation target equipment may be performed.

### CITATION LIST

### PATENT LITERATURE

Patent Literature 1: Japanese application publication No. 2002-374584

### SUMMARY OF INVENTION

An operation terminal according to a first aspect comprise: a display unit; a communication unit configured to perform communication; a storage unit configured to store specification information, which is information on an available operation, in association with an equipment identification code, for each of a plurality of equipments; and a control unit configured to perform control to obtain an equipment identification code of an operation target equipment by using the communication unit, and to perform control to display an operation screen for the operation target equipment on the basis of the specification information associated with the obtained equipment identification code.

A program according to a second aspect causes an operation terminal including a display unit and a communication unit for performing communication to execute: a step of storing specification information, which is information about an available operation, in association with an equipment identification code, for each of a plurality of equipments; a step of obtaining an equipment identification code of an operation target equipment by using the communication unit; and a step of displaying an operation screen for the operation target equipment on the basis of the specification information associated with the obtained equipment identification code.

A method according to a third aspect is used with an operation terminal including a display unit and a communication unit for performing communication. The method comprises: a step of storing specification information, which is information about an available operation, in association with an equipment identification code, for each of a plurality of equipments; a step of obtaining an equipment identification code of an operation target equipment by using the communication unit; and a step of displaying an operation screen for the operation target equipment on the basis of the specification information associated with the obtained equipment identification code.

### BRIEF DESCRIPTION OF DRAWINGS

Fig. 1 is a block diagram illustrating a consumer's facility according to an embodiment.
Fig. 2 is a figure illustrating an application scene of a control system according to the embodiment.
Fig. 3 is a figure illustrating properties of an operation target equipment according to the embodiment.
Fig. 4 is a block diagram illustrating a configuration of an operation terminal according to the embodiment.
Fig. 5 is a figure illustrating an operation list table according to the embodiment.
Fig. 6 is a flow diagram illustrating an operation of an operation terminal according to the embodiment.
Fig. 7 is a figure illustrating a configuration example of an operation screen according to the embodiment (part 1).
Fig. 8 is a figure illustrating the configuration example of the operation screen according to the embodiment (part 2).
Fig. 9 is a figure illustrating an application scene of a control system according to a second modification of the embodiment.

### DESCRIPTION OF EMBODIMENTS

An operation terminal according to embodiment comprises a display unit; a communication unit configured to perform communication; a storage unit configured to store specification information, which is information on an available operation, in association with an equipment identification code, for each of a plurality of equipments; and a control unit configured to obtain an equipment identification code of an operation target equipment by using the communication unit, and to perform control to display an operation screen for the operation target equipment on the basis of the specification information associated with the obtained equipment identification code.

In the embodiment, the specification information includes at least one of a function supported by an equipment, a setting value supported by the equipment, and a value indicating a type of the equipment.

In the embodiment, each of the plurality of equipments belongs to a same equipment type as an equipment type to which the operation target equipment belongs. The equipment identification code includes at least one of a manufacturer code indicating a manufacturer of an equipment, a product code indicating a product name of the equipment, and an area code indicating an area in which the equipment is to be used.

In the embodiment, the operation screen is configured to be able to identify an available operation for the operation target equipment.

In the embodiment, the operation screen includes a first display object associated with an available operation for the operation target equipment. In a case where the control unit detects a user input for selecting the first display object, the control unit performs control to transmit, via a network, an operation instruction for instructing an operation associated with the selected first display object.

In the embodiment, in the operation screen, a second display object associated with an unavailable operation for the operation target equipment is excluded.

In a first modification of the embodiment, the operation screen includes a second display object associated with an unavailable operation for the operation target equipment. In a case where the control unit detects a user input for selecting the first display object, the control unit reflects the user input in the first display object. In a case where the control unit detects a user input for selecting the second display object, the control unit performs control so as not to reflect the user input in the second display object, or so as to display an error.

In a second modification the embodiment, in the specification information, the available operation is classified into an operation allowed to be operated via a public network and an operation not allowed to be operated via the public network. In a case where the control unit operates the operation target equipment via the public network, the control unit performs control to display the operation screen on the basis of an operation allowed to be operated via the public network in the specification information associated with the obtained equipment identification code.

In the second modification the embodiment, the operation screen is configured to be able to identify an operation that is one of the available operations for the operation target equipment and that is allowed to be operated via the public network.

A program according to the embodiment causes an operation terminal including a display unit and a communication unit for performing communication to execute: a step of storing specification information, which is information about an available operation, in association with an equipment identification code, for each of a plurality of equipments; a step of obtaining an equipment identification code of an operation target equipment by using the communication unit; and a step of displaying an operation screen for the operation target equipment on the basis of the specification information associated with the obtained equipment identification code.

A method according to the embodiment is used with an operation terminal including a display unit and a communication unit for performing communication. The method comprises: a step of storing specification information, which is information about an available operation, in association with an equipment identification code, for each of a plurality of equipments; a step of obtaining an equipment identification code of an operation target equipment by using the communication unit; and a step of displaying an operation screen for the operation target equipment on the basis of the specification information associated with the obtained equipment identification code.

### [Embodiment]

### (Consumer's facility)

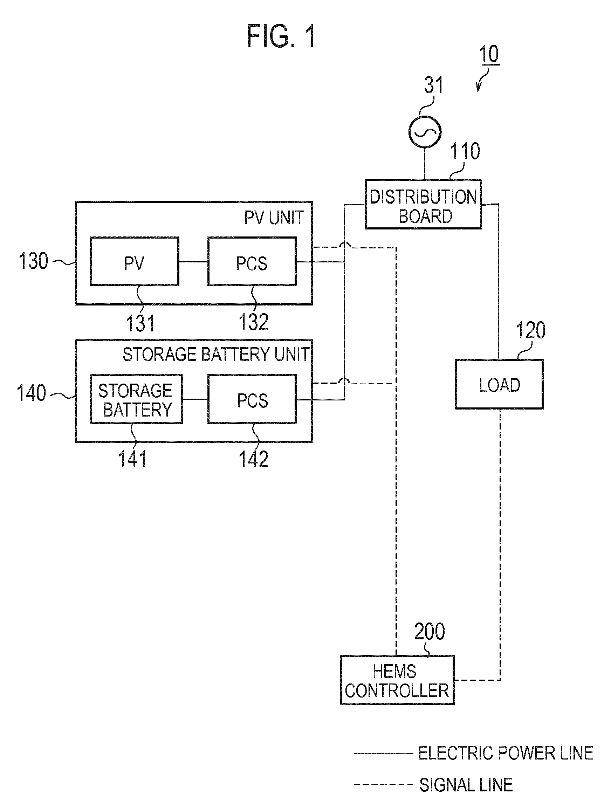

Hereinafter, a consumer's facility according to an embodiment will be explained. Fig. 1 is a figure illustrating a consumer's facility 10 according to the embodiment.

As illustrated in Fig. 1, the consumer's facility 10 includes a distribution board 110, a load 120, a PV unit 130, a storage battery unit 140, and an HEMS controller 200.

The distribution board 110 is connected to an electricity distribution line 31 (power grid). The distribution board 110 is connected via an electric power line to a load 120, a PV unit 130, and a storage battery unit 140. The distribution board 110 may have a measurement unit measuring the electric power provided from the electricity distribution line 31.

The load 120 is an equipment that consumes the electric power provided via the electric power line. For example, the load 120 may be a refrigerator, a lighting fixture, an air conditioner, a television set, or the like. The load 120 may be a single equipment, or may include multiple equipments.

The PV unit 130 is an equipment for generating electric power, and includes a PV 131 and a PCS 132. The PV 131 is a type of distributed power supplies, and the PV 131 generates electric power by receiving light from the sun, and outputs the generated DC electric power. The PCS 132 converts the DC electric power that is output from the PV 131 into an AC electric power, and outputs the AC electric power via the electric power line.

The storage battery unit 140 is an equipment for accumulating electric power, and the storage battery unit 140 includes a storage battery 141 and a PCS 142. The storage battery 141 accumulates (charges) the electric power and outputs (discharges) the electric power. When the storage battery 141 is charged, the PCS 142 converts the AC electric power received via the electric power line into a DC electric power, and outputs the DC electric power to the storage battery 141. When the storage battery 141 is discharged, the PCS 142 converts the DC electric power that is output from the storage battery 141 into an AC electric power, and outputs the AC electric power via the electric power line.

The HEMS controller 200 is a control device for controlling multiple equipments provided in the consumer's facility 10 (the load 120, the PV unit 130, and the storage battery unit 140). The HEMS controller 200 controls, via a signal line, the load 120, the PV unit 130, and the storage battery unit 140. The signal line may be wirelessly connected or may be a wired line.

### (Application scene)

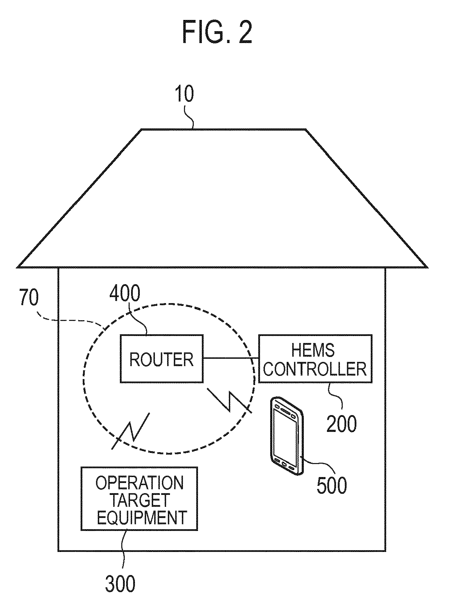

An application scene in which the control system according to the embodiment is applied will be hereinafter explained. Fig. 2 is a figure illustrating an application scene in which the control system according to the embodiment is applied.

As illustrated in Fig. 2, the control system according to the embodiment includes a local area network 70, an HEMS controller 200, an operation target equipment 300, and an operation terminal 500.

The local area network 70 is a network provided in the consumer's facility 10. The local area network 70 may be a wireless LAN, or may be a wired LAN. The local area network 70 includes a router 400. Fig. 2 illustrates an example of a case where the HEMS controller 200 and the router 400 are connected by a wire, the operation target equipment 300, the operation terminal 500, and the router 400 are connected wirelessly. Alternatively, the HEMS controller 200 and the router 400 may be connected wirelessly, and the operation target equipment 300, the operation terminal 500, and the router 400 may be connected by a wire.

The HEMS controller 200 communicates with the operation target equipment 300 and the operation terminal 500 via the local area network 70. The HEMS controller 200 receives an operation instruction for the operation target equipment 300 from the operation terminal 500, the HEMS controller 200 transmits the operation instruction to the operation target equipment 300.

The operation target equipment 300 communicates via the local area network 70 with the HEMS controller 200. The operation target equipment 300 is the load 120, the PV unit 130, or the storage battery unit 140. The operation target equipment 300 receives an operation instruction from the HEMS controller 200. In a case where the operation target equipment 300 accepts the received operation instruction, the operation target equipment 300 performs operation in accordance with the received operation instruction. In a case where the operation target equipment 300 accepts the received operation instruction, the operation target equipment 300 transmits, to the HEMS controller 200, a response in reply to the received operation instruction. In a case where the operation target equipment 300 does not accept the received operation instruction, the operation target equipment 300 transmits, to the HEMS controller 200, a negative response in reply to the received operation instruction.

The operation terminal 500 communicates via the local area network 70 with the HEMS controller 200. The operation terminal 500 is a portable terminal that performs radio communication (for example, a smartphone, a tablet terminal, or the like). Alternatively, the operation terminal 500 may be a personal computer communicating via a wire or may be a television set having a browser and the like. The operation terminal 500 transmits, to the HEMS controller 200, an operation instruction in reply to the operation target equipment 300. The operation terminal 500 receives, from the HEMS controller 200, a response or a negative response in reply to the operation instruction.

Alternatively, instead of communicating with the HEMS controller 200, the operation terminal 500 may directly perform communication with the operation target equipment 300. In this case, the operation terminal 500 transmits the operation instruction to the operation target equipment 300 without relying on the HEMS controller 200. The operation terminal 500 receives, from the operation target equipment 300, a response or a negative response in reply to the operation instruction without relying on the HEMS controller 200.

In the embodiment, messages (an operation instruction, a response, and a negative response) transmitted and received via the local area network 70 are messages based on ECHONET Lite (registered trademark) specification. In the ECHONET Lite (registered trademark) specification, a "class" is defined for each type of equipments, and a control target and setting information in the equipment are defined as a "property" for each class.

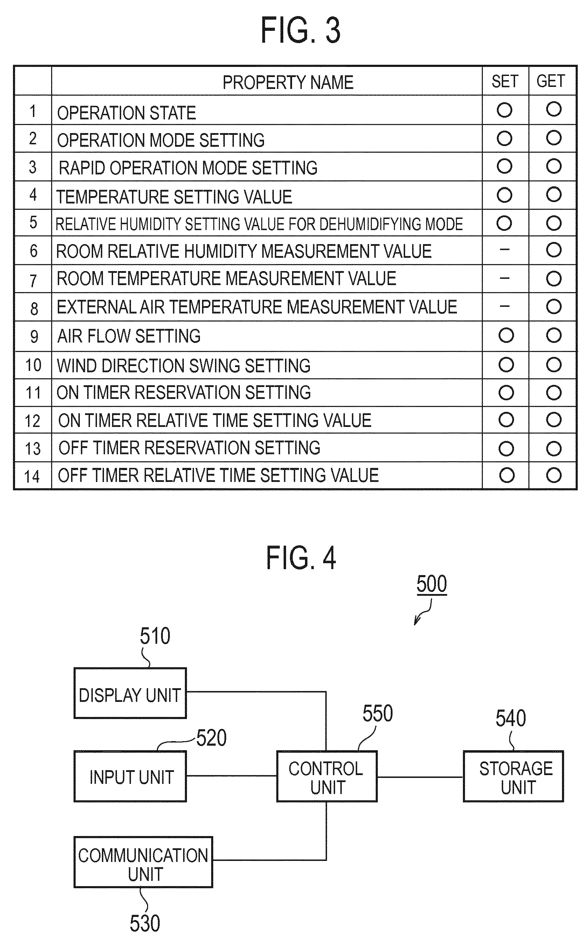

Fig. 3 is a figure illustrating properties of the operation target equipment 300 according to the embodiment. In this case, an air conditioner, which is a type of loads 120, is considered as an operation target equipment 300. The air conditioner belongs to "household air conditioner class" in the ECHONET Lite (registered trademark) specification.

As illustrated in Fig. 3, in the household air conditioner class, multiple properties are defined. For example, the operation mode property indicates automatic, cooling, heating, dehumidifying, or air blow. The temperature setting value property indicates a temperature setting value in a range from 0 degrees Celsius to 50 degrees Celsius. The air flow setting property indicates an air flow level (any one of eight levels) or an air flow automation state. The wind direction swing setting property indicates wind direction swing OFF, upper and lower directions, right and left directions, or upper, lower, right, and left directions.

In each property, an access rule is defined. The access rule is whether "Set", i.e., a property value write request, can be performed or not, and whether "Get", i.e., a property value read request, can be performed or not.

For example, the operation mode property accepts both of Set and Get. Therefore, when a Set message (operation instruction) designating an operation mode is transmitted to the operation target equipment 300, the designated operation mode can be set in the operation target equipment 300 if the operation target equipment 300 supports the designated operation mode. When a Get message (operation instruction) for the operation mode property is transmitted to the operation target equipment 300, the operation mode that is set in the operation target equipment 300 can be obtained.

However, when the operation mode is designated by the Set message (operation instruction) but the designated operation mode is not supported by the operation target equipment 300, the operation target equipment 300 does not accept the Set message, and transmits a Set negative response message.

### (Configuration of operation terminal)

Hereinafter, a configuration of the operation terminal 500 according to the embodiment will be explained. Fig. 4 is a block diagram illustrating the configuration of the operation terminal 500.

As illustrated in Fig. 4, the operation terminal 500 includes a display unit 510, an input unit 520, a communication unit 530, a storage unit 540, and a control unit 550.

The display unit 510 displays various kinds of images on the basis of an image signal received from the control unit 550. In the embodiment, the display unit 510 displays an operation screen of the operation target equipment 300.

The input unit 520 detects a user input, and outputs a signal indicating a content of the user input to the control unit 550. The input unit 520 may be integrally made with the display unit 510 (a so-called touch panel display).

The communication unit 530 performs communication via the local area network 70 (for example, wireless LAN communication or wired LAN communication). The communication unit 530 receives a communication signal, and outputs the received communication signal to the control unit 530. The communication unit 530 transmits a communication signal received from the control unit 550. Although the details will be explained later, the communication unit 530 may perform communication via a public network such as a portable telephone network and the like.

The storage unit 540 stores various kinds of information used for control in the control unit 550. The storage unit 540 stores programs executed by the control unit 550 (for example, application software and the like). Further, the storage unit 540 stores an operation list table explained later.

The control unit 550 performs various kinds of controls in the operation terminal 500 by executing programs stored in the storage unit 540. The details of the control of the control unit 550 will be explained later.

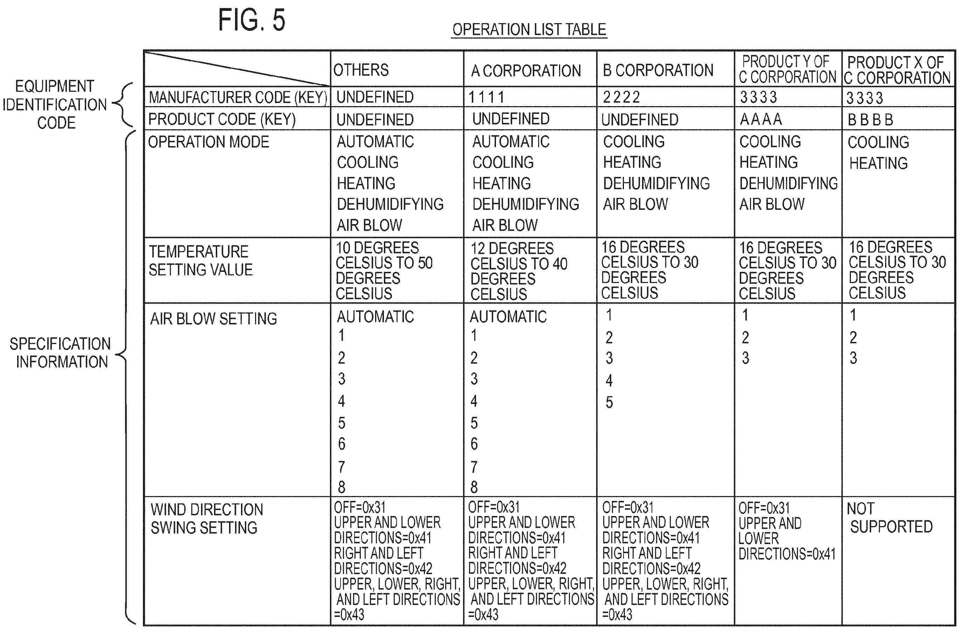

Fig. 5 is a figure illustrating an operation list table according to the embodiment. The operation list table is stored in the storage unit 540.

As illustrated in Fig. 5, the operation list table is a table in which specification information which is information about available operation is associated with an equipment identification code for each of multiple equipments. The multiple equipments belong to the same class as the class to which the operation target equipment 300 belongs.

In a case where the operation target equipment 300 is an air conditioner, the operation list table associates the specification information with an equipment identification code for each of multiple equipments (air conditioners) which belong to the household air conditioner class. Fig. 5 illustrates an example of a case where the operation list table includes specification information of each of "A corporation", "B corporation", "product Y of C corporation", "product X of C corporation", "others".

The equipment identification code includes a manufacturer code indicating the manufacturer of the equipment. The equipment identification code may further include a product code indicating the product name of the equipment. The manufacturers "A corporation", "B corporation", and "C corporation" are identified by manufacturer codes "1111", "2222", "3333", respectively. The product names "Y", "X" are identified by product codes "AAAA", "BBBB", respectively.

The specification information includes at least one of a function supported by the equipment, a setting value supported by the equipment, and a value indicating the type of the equipment. In a case where the operation target equipment 300 is an air conditioner, the functions supported by the equipment include, for example, supported operation modes (automatic, cooling, heating, dehumidifying, air blow), supported air flow setting modes (whether air flow automation is provided or not), supported wind direction swings (upper and lower directions, right and left directions and, upper, lower, right, and left directions), and the like. The setting values supported by the equipment include, for example, supported temperature setting range, supported air flow level range, and the like.

### (Operation of operation terminal)

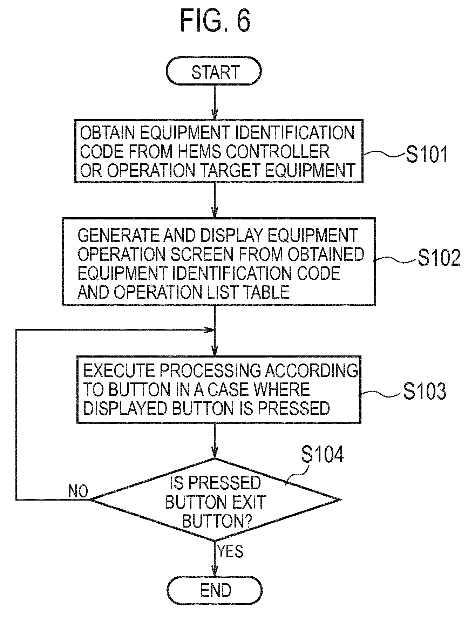

Hereinafter, an operation of the operation terminal 500 according to the embodiment will be explained. Fig. 6 is a flow diagram illustrating an operation of the operation terminal 500. In the initial state of this flow, the equipment operation screen is not displayed, and, for example, this flow is started upon a trigger when the equipment operation application is activated.

As illustrated in Fig. 6, in step S101, the control unit 550 obtains the equipment identification code of the operation target equipment 300 with the communication unit 530. The control unit 550 requests the HEMS controller 200 to transmit an equipment identification code, so that the control unit 550 obtains the equipment identification code from the HEMS controller 200. Alternatively, the control unit 550 may request the operation target equipment 300 to transmit the equipment identification code, so that the control unit 550 may obtain the equipment identification code from the operation target equipment 300 without relying on the HEMS controller 200.

In step S102, the control unit 550 extracts the specification information associated with the equipment identification code obtained in step S101 from the operation list table stored in the storage unit 540. The control unit 550 displays, on the display unit 510, an operation screen corresponding to the operation target equipment 300 on the basis of the extracted specification information.

The operation screen is configured to be able to identify an available operation for the operation target equipment 300. More specifically, the operation screen is a first display object associated with the operation available for the operation target equipment 300. In the operation screen, a second display object associated with an operation that is not available with the operation target equipment 300 is excluded. The "display object" is a button selected by a user, a character string indicating the current setting state, and the like. A configuration example of an operation screen will be explained later.

In step S103, in a case where the input unit 520 detects user input for selecting a displayed button, the control unit 550 uses the communication unit 530 to transmit an operation instruction for instructing an operation associated with the selected button. The operation instruction is, for example, a Set message.

In step S104, the control unit 550 confirms whether the input unit 520 has detected a user input for selecting an exit button. The exit button may be a button displayed on the display unit 510, or may be a physical button. In a case where a user input for selecting the exit button is not detected (step S104; NO), the control unit 550 returns the processing back to step S103. In contrast, in a case where a user input for selecting the exit button is detected (step S104; YES), the control unit 550 terminates the equipment operation application, and terminates display of the operation screen.

### (Operation screen)

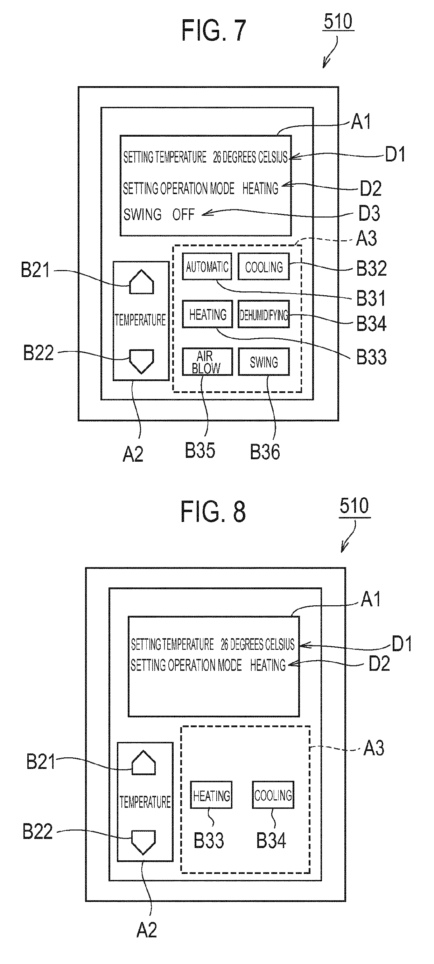

Hereinafter, an operation screen displayed on the display unit 510 will be explained. Fig. 7 is a figure illustrating a configuration example of an operation screen in a case where the obtained equipment identification code does not exist in the operation list table.

As illustrated in Fig. 7, in a case where the obtained equipment identification code does not exist in the operation list table, the control unit 550 extracts the specification information associated with "others" in the operation list table, and generates an operation screen on the basis of the extracted specification information.

Fig. 7 illustrates an example of a case where the operation screen includes a setting display region A1, a temperature setting region A2, and an operation switch region A3. The setting display region A1 includes a character string D1 indicating a temperature that has been set, a character string D2 indicating a operation mode that has been set, and a character string D3 indicating a wind direction swing that has been set. The temperature setting region A2 includes a temperature increase button B21 and a temperature decrease button B21. The operation switch region A3 includes an automatic button B31, a cooling button B32, a heating button B33, a dehumidifying button B34, an air blow button B35, and a swing button B36.

As described above, in a case where the obtained equipment identification code does not exist in the operation list table, the control unit 550 generates an operation screen upon deeming that the operation target equipment 300 supports all the functions and all the setting values.

Fig. 8 is a figure illustrating a configuration example of an operation screen in a case where the obtained equipment identification code exists in the operation list table. In this case, the obtained equipment identification code is assumed to be a manufacturer code "3333", and a product code "BBBB". In this case, since the equipment identification code matches the "product X of C corporation", the control unit 550 extracts the specification information associated with the "product X of C corporation", and generates an operation screen on the basis of the extracted specification information.

In the specification information of the "product X of C corporation", the operation mode is only the "cooling" and "heating" and the wind direction swing setting is "not supported". Therefore, as illustrated in Fig. 8, the control unit 550 excludes each button (i.e., the automatic button B31, the dehumidifying button B34, the air blow button B35, and the swing button B36) associated with the unavailable operation from the operation switch region A3. In addition, the control unit 550 excludes the character string associated with unavailable operation (i.e., the character string D3 indicating the wind direction swing) from the setting display region A1.

The control unit 550 may expand the sizes of the non-excluded display objects (the buttons, the character string) by the sizes of the excluded display objects (the buttons, the character string). For example, when the automatic button B31, the dehumidifying button B34, the air blow button B35, and the swing button B36 are excluded, vacant spaces are generated, and accordingly, the sizes of the cooling button B32 and the heating button B33 are increased in order to fill the vacant spaces.

In the specification information of the "product X of C corporation", the range of the temperature setting value is 16 degrees Celsius to 30 degrees Celsius. Therefore, in a case where the setting temperature is 30 degrees Celsius, the temperature increase button B21 corresponds to the second display object associated with the unavailable operation, and accordingly, the temperature increase button B21 is excluded. Likewise, in a case where the setting temperature is 16 degrees Celsius, the temperature decrease button B22 corresponds to the second display object associated with unavailable operation, and accordingly, the temperature decrease button B22 is excluded.

Further, in the specification information of the "product X of C corporation", the range of the air flow setting value is 1 to 3. Therefore, when a case where the temperature setting region is added to the operation screen is considered, and the air flow setting value is "3", the air flow increase button corresponds to the second display object associated with unavailable operation, and therefore, the air flow increase button is excluded.

### (Summary of the embodiment)

The operation terminal 500 according to the embodiment includes the storage unit 540 for storing specification information, i.e., information about available operation, in association with an equipment identification code for each of multiple equipments, and a control unit 550 for obtaining the equipment identification code of the operation target equipment 300 via the network, and controlling display of the operation screen for the operation target equipment 300 on the basis of the specification information associated with the obtained equipment identification code. Therefore, the operation screen matching the specification of the operation target equipment 300 can be displayed. Therefore, this can prevent the user from selecting an unavailable operation for the operation target equipment 300.

In the embodiment, the specification information includes at least one of a function supported by the equipment and a setting value supported by the equipment. Therefore, an appropriate operation screen can be displayed in accordance with the functions supported by the equipment and the setting values supported by the equipment.

In the embodiment, the storage unit 540 stores the specification information for each of multiple equipments which belongs to the same equipment type (class) as the equipment type (class) to which the operation target equipment 300 belongs. The equipment identification code includes at least one of a manufacturer code indicating the manufacturer of the equipment and the product code indicating the product name of the equipment. Therefore, even in a case where the user does not know the manufacturer or the product name of the operation target equipment 300, an appropriate operation screen can be displayed.

The equipment identification code may include an area code indicating an area where it should be used. The unit of area may be a country (such as Japan, the United States, and the like), or may be a region in the same country (such as Kanto region, Kansai region, and the like). For example, legal regulations and electric power circumstances are different according to countries, and it is expected that there are available functions and unavailable functions. The operation terminal 500 can determine the area where the operation terminal 500 is located from user input or a country code obtained from standby information of a public network (3G and the like). Therefore, an appropriate operation screen for the area where the user is located can be displayed.

In the embodiment, the operation screen is configured to be able to identify an available operation for the operation target equipment 300. Therefore, the user can find available operations for the operation target equipment 300, and can adopt only the available operations for the operation target equipment 300 as the target of selection.

In the embodiment, the operation screen includes a first display object associated with available operations for the operation target equipment 300. In a case where the control unit 550 detects a user input for selecting the first display object, the control unit 550 performs control to transmit, via the network, an operation instruction for instructing an operation associated with the selected first display object. Therefore, only an appropriate operation instruction can be configured to be transmittable, so that this can prevent an unexpected error from occurring in the operation target equipment 300 or the HEMS controller 200.

In the embodiment, in the operation screen, the second display object associated with an unavailable operation for the operation target equipment 300 is excluded. Therefore, the user cannot select an unavailable operation for the operation target equipment 300, so that this can reliably prevent the user from selecting an unavailable operation for the operation target equipment 300.

### [First modification]

In the embodiment explained above, in the operation screen, the second display object is excluded. In contrast, in the first modification of the embodiment, the operation screen includes not only the first display object but also the second display object. More specifically, the second display object is not excluded, and is left intentionally on the operation screen.

The second display object is preferably in a display mode that is different from a display mode of the first display object. The display mode is, for example, a color, a size, or the like. Therefore, the user can find not only the available operations but also unavailable operations. Therefore, for example, the specification of the operation target equipment 300 can be estimated.

In the first modification of the embodiment, in a case where the control unit 550 detects a user input for selecting the first display object, the user input is reflected in the first display object. "Reflecting the user input in the first display object" means that the display mode of the first display object is changed and that the operation instruction associated with the first display object is performed.

In a case where the control unit 550 detects a user input for the second display object, the control unit 550 performs control so as not to reflect the user input in the second display object, or so as to display an error. Accordingly, this can prevent this user from selecting an unavailable operation for the operation target equipment 300.

### [Second modification]

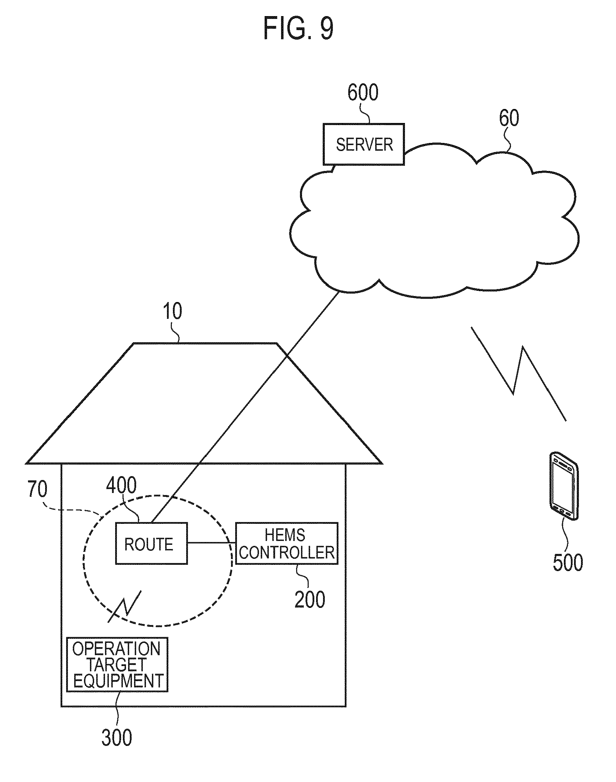

In the embodiment explained above, an operation performed via a public network (hereinafter referred to as "remote operation") is not specifically mentioned. However, in the second modification of the embodiment, a control is performed in view of remote operation. Fig. 9 is a figure illustrating an application scene of a control system according to the second modification of the embodiment.

As illustrated in Fig. 9, the router 400 provided in the consumer's facility 10 is connected to the public network 60. The public network 60 is provided with a server 600. The operation terminal 500 is wirelessly connected with the public network 60. However, the operation terminal 500 may be connected with the public network 60 via a wire.

The operation terminal 500 transmits an operation instruction to the server 600 via the public network 60. The server 600 transmits an operation instruction received from the operation terminal 500 via the public network 60 and the local area network 70 to the HEMS controller 200. The HEMS controller 200 transmits an operation instruction received from the server 600 via the local area network 70 to the operation target equipment 300.

As described above, the remote operation is an operation performed on the operation target equipment 300 via the public network 60 from the outside of the consumer's facility 10. Therefore, from the viewpoint of safety, it may be possible consider prohibiting remotely operating some of the operations of the available operations for the operation target equipment 300.

Therefore, in the second modification of the embodiment, the specification information in the operation list table is an operation allowed to be remotely operated and an operation that is not allowed to be remotely operated. In a case where a connection destination network is the public network 60, the control unit 550 performs control to display an operation screen on the basis of an operation allowed to be remotely operated in the specification information associated with the obtained equipment identification code.

The operation screen is configured to be able to identify an operation allowed to be remotely operated from among the available operations for the operation target equipment 300. For example, like the first embodiment explained above, a display object associated with an operation that is one of the available operations for the operation target equipment 300 and that is not allowed to be remotely operated is excluded from the operation screen. Alternatively, like the first modification of the first embodiment explained above, a control is performed so that a user input is not reflected in the display object associated with an operation that is one of the available operations for the operation target equipment 300 and that is not allowed to be remotely operated, or an error is displayed for the display object associated with an operation that is one of the available operations for the operation target equipment 300 and that is not allowed to be remotely operated.

### [Others embodiment]

In the embodiment explained above, the operation target equipment 300 is an air conditioner which is a type of loads 120. However, the operation target equipment 300 may be a load 120 other than the air conditioner, or may be the storage battery unit 140, and the like.

In the embodiment explained above, for example, the system based on the ECHONET Lite (registered trademark) specification has been shown. However, the embodiment is not limited to the system based on the ECHONET Lite (registered trademark) specification, and, for example, the present invention may be applied to a system based on other communication specifications such as ZigBee (registered trademark) or KNX.

In the embodiment explained above, for example, a case where the control device is the HEMS controller 200 has been shown. However, the control device may be provided in CEMS (Cluster/Community Energy Management System), BEMS (Building Energy Management System), FEMS (Factory Energy Management System), SEMS (Store Energy Management System), or the like.

The entire contents of Japanese Patent Application No. 2013-244577 (filed on November 27, 2013) are incorporated into the specification of the present application by reference.

### INDUSTRIAL APPLICABILITY

According to the embodiments, an operation terminal, a program, and a method that can prevent performing an operation inappropriate for an operation target equipment can be provided.

## Claims

1. An operation terminal comprising:
a display unit;
a communication unit configured to perform communication;
a storage unit configured to store specification information, which is information on an available operation, in association with an equipment identification code, for each of a plurality of equipments; and
a control unit configured to obtain an equipment identification code of an operation target equipment by using the communication unit, and to perform control to display an operation screen for the operation target equipment on the basis of the specification information associated with the obtained equipment identification code.

2. The operation terminal according to claim 1, wherein the specification information includes at least one of a function supported by an equipment, a setting value supported by the equipment, and a value indicating a type of the equipment.

3. The operation terminal according to claim 1 or 2, wherein each of the plurality of equipments belongs to a same equipment type as an equipment type to which the operation target equipment belongs, and
the equipment identification code includes at least one of a manufacturer code indicating a manufacturer of an equipment, a product code indicating a product name of the equipment, and an area code indicating an area in which the equipment is to be used.

4. The operation terminal according to any one of claims 1 to 3, wherein the operation screen is configured to be able to identify an available operation for the operation target equipment.

5. The operation terminal according to claim 4, wherein the operation screen includes a first display object associated with an available operation for the operation target equipment, and
in a case where the control unit detects a user input for selecting the first display object, the control unit performs control to transmit, via a network, an operation instruction for instructing an operation associated with the selected first display object.

6. The operation terminal according to claim 5, wherein in the operation screen, a second display object associated with an unavailable operation for the operation target equipment is excluded.

7. The operation terminal according to claim 5, wherein the operation screen includes a second display object associated with an unavailable operation for the operation target equipment,
in a case where the control unit detects a user input for selecting the first display object, the control unit reflects the user input in the first display object, and
in a case where the control unit detects a user input for selecting the second display object, the control unit performs control so as not to reflect the user input in the second display object, or so as to display an error.

8. The operation terminal according to any one of claims 1 to 7, wherein in the specification information, the available operation is classified into an operation allowed to be operated via a public network and an operation not allowed to be operated via the public network, and
in a case where the control unit operates the operation target equipment via the public network, the control unit performs control to display the operation screen on the basis of an operation allowed to be operated via the public network in the specification information associated with the obtained equipment identification code.

9. The operation terminal according to claim 8, wherein the operation screen is configured to be able to identify an operation that is one of the available operations for the operation target equipment and that is allowed to be operated via the public network.

10. A program for causing an operation terminal including a display unit and a communication unit for performing communication to execute:
a step of storing specification information, which is information about an available operation, in association with an equipment identification code, for each of a plurality of equipments;
a step of obtaining an equipment identification code of an operation target equipment by using the communication unit; and
a step of displaying an operation screen for the operation target equipment on the basis of the specification information associated with the obtained equipment identification code.

11. A method used with an operation terminal including a display unit and a communication unit for performing communication,
the method comprising:
a step of storing specification information, which is information about an available operation, in association with an equipment identification code, for each of a plurality of equipments;
a step of obtaining an equipment identification code of an operation target equipment by using the communication unit; and
a step of displaying an operation screen for the operation target equipment on the basis of the specification information associated with the obtained equipment identification code.
